(19) Europäisches Patentamt / European Patent Office / Office européen des brevets

(11) **EP 3 447 353 B1**

(12) **FASCICULE DE BREVET EUROPEEN**

(45) Date de publication et mention
de la délivrance du brevet:
**09.09.2020   Bulletin 2020/37**

(51) Int Cl.:
*F16L 9/04* *(2006.01)*          *E21B 17/01* *(2006.01)*
*F16L 13/02* *(2006.01)*        *F16L 21/00* *(2006.01)*

(21) Numéro de dépôt: **18305892.4**

(22) Date de dépôt: **05.07.2018**

(54) **ELEMENT DE CONDUITE AVEC TUBE FRETTE ET EMBOUTS EN ACIER A HAUTE LIMITE ELASTIQUE, ET PROCEDE POUR FAIRE EVOLUER UNE COLONNE MONTANTE AVEC UN TEL ELEMENT DE CONDUITE**

LEITERELEMENT MIT AUFGESCHRUMPFTEM ROHR UND STAHLENDSTÜCKEN MIT HOHER ELASTIZITÄTSGRENZE, UND VERFAHREN, UM EINE STEIGLEITUNG MIT EINEM SOLCHEN LEITERELEMENT AUSZUBAUEN

DRIVING ELEMENT WITH A TUBE BAND AND TIPS MADE OF STEEL WITH HIGH ELASTIC LIMIT, AND METHOD FOR ADVANCING A RISER WITH SUCH A DRIVING ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.08.2017   FR 1757856**

(43) Date de publication de la demande:
**27.02.2019   Bulletin 2019/09**

(73) Titulaire: **IFP Energies nouvelles**
**92852 Rueil-Malmaison Cedex (FR)**

(72) Inventeurs:
• **PERSENT, Emmanuel**
  **78290 CROISSY SUR SEINE (FR)**
• **AVERBUCH, Daniel**
  **69390 VERNAISON (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A1- 2 985 407      FR-A1- 2 799 789**
**FR-A1- 2 937 676      FR-A1- 2 956 694**

**Description**

La présente invention concerne le domaine des conduites haute pression pour équiper une installation de forage pétrolier et/ou une installation de production. Plus précisément, elle concerne une application de la technique de frettage pour renforcer des tubes métalliques par des éléments de renfort en matériau composite. La présente invention concerne plus particulièrement une conduite auxiliaire d'une colonne montante.

La technique du frettage consiste à enrouler un élément de renfort généralement sous forme d'une bande en fibres enrobées dans un polymère, autour d'un noyau métallique afin d'augmenter la résistance du noyau à la pression interne sans augmenter son poids de manière significative compte tenu du faible poids des bandes.

Le noyau peut être un tube métallique, par exemple en acier. L'élément de renfort est un élément allongé. Il peut se présenter sous la forme d'un ruban, d'un fil, ou de préférence d'un ensemble de fils ou d'une mèche enrobée dans une matrice polymère.

Selon un mode de réalisation du frettage, l'élément de renfort est enroulé autour du noyau en y introduisant une tension. Ainsi, l'élément de renfort enroulé autour du noyau est contraint en traction ce qui introduit la mise sous contrainte de compression du noyau métallique. La précontrainte subie par le noyau est semblable à celle que produirait une pression extérieure.

Pour effectuer des opérations de forage d'un gisement sous-marin, on utilise une colonne montante, généralement appelée "riser", permettant de relier le bloc obturateur de puits, situé au niveau du fond marin, à la surface de la mer. La conduite "riser" est munie d'au moins deux conduites auxiliaires appelées "kill line" (KL) et "choke line" (CL) qui ont pour fonction principale d'établir une liaison hydraulique entre la surface de la mer et le fond marin. Plus particulièrement, les conduites auxiliaires permettent d'alimenter le puits en fluide en circulant sous un obturateur de sécurité fermé, et/ou d'évacuer un fluide du puits, sans passer par l'intérieur de la colonne montante qui n'est pas résistante à une haute pression. Le fluide convoyé, provenant d'une "venue" d'un réservoir sous-terrain peut circuler sous une pression pouvant atteindre plus de 700 bars.

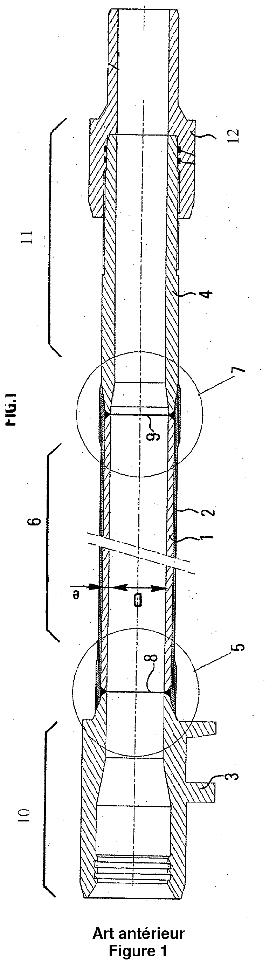

Pour réaliser des conduites auxiliaires d'une colonne montante de forage, il a été proposé, notamment dans les brevets FR 2 828 262 et FR 2 828 121 du demandeur, d'utiliser des tubes frettés. Cette réalisation d'un élément de conduite haute pression en tube fretté est à la fois simple et économique. La figure 1 représente un exemple de réalisation divulgué dans l'art antérieur. L'élément de conduite comporte quatre parties distinctes : un tube métallique 1 ou noyau, un premier moyen de raccordement 3, un deuxième moyen de raccordement 4 et des couches de frettage 2. Le moyen de raccordement 3 est un moyen de raccordement femelle apte à être raccordé à une goupille mâle 12 fixée sur le moyen de raccordement 4. Le tube 1 est fabriqué, par exemple à partir d'une ébauche laminée, puis, les moyens de raccordement 3 et 4 sont directement soudés aux extrémités 8 et 9 du tube 1. Ensuite, en enroulant un élément de renfort autour du tube 1 et autour d'une partie des moyens de raccordement 3 et 4, on réalise le frettage de l'ensemble métallique. Seules les parties extérieures 10 et 11 des moyens de raccordement ne sont pas frettées et comportent une épaisseur suffisante pour résister au moins à la même pression interne que la partie fretté.

Ainsi, pour réaliser une telle conduite, il est obligatoire d'avoir des moyens de raccordement 3 et 4 dont les dimensions (diamètres et épaisseur) des extrémités à souder sont adaptées au tube 1 pour pouvoir y être soudés directement. Ces moyens de raccordement 3 et 4 doivent être mécaniquement compatibles avec la contrainte imposée par le frettage sur les zones de transition 5 et 7. Cependant les formes et les dimensions des moyens de raccordement 3 et 4 sont également imposées par leurs spécifications opérationnelles et par les liaisons spécifiques d'intégration des lignes de sécurité sur le joint de "riser", et en particulier la coopération avec les joints de "riser". L'ensemble des contraintes concernant les moyens de raccordement, nécessite une réalisation spécifique et complexe de ces moyens de raccordement.

Il n'est donc pas possible de standardiser la conception des éléments de conduite haute pression selon l'art antérieur (KL et CL) qui doivent avoir des raccords de connexion spécifiques au "riser".

Les documents FR2799789 A1, EP2985407 A1, FR2937676 A1 et FR2956694 A1 sont également considérés au titre de l'art de la technique.

Une autre contrainte principale des conduites est leur résistance à la haute pression. Typiquement, les conduites en acier actuellement utilisées pour les lignes auxiliaires des colonnes montantes sont prévues pour résister à des pressions de l'ordre de 15 000 psi (soit 103 MPa). Toutefois, certaines nouvelles applications nécessitent des lignes auxiliaires prévues pour résister à des pressions de l'ordre de 20 000 psi (soit 138 MPa). Les moyens de raccordement actuels, notamment ceux décrits dans les demandes de brevet FR 2 828 262 et FR 2 828 121 du demandeur ne permettent pas de résister à une telle pression.

De plus, adapter ces configurations pour des pressions plus élevées nécessiterait d'augmenter l'épaisseur des moyens de raccordement. Il en résulterait un encombrement et un poids plus importants si l'épaisseur est augmentée par augmentation du diamètre extérieur, et il en résulterait une diminution du diamètre et donc une augmentation des pertes de charge, si l'épaisseur est augmentée par diminution du diamètre intérieur. Cette dernière option conduirait à une réduction importante du diamètre de passage des lignes Choke and Kill au niveau de l'embout d'au minimum 1" soit 2,54 cm (3.5" soit 8,89 cm au lieu de 4.5" soit 11,43 cm). Cette réduction entrainerait des pertes de charge qui compliqueraient les opérations de contrôle d'une éruption. En première approximation, on peut estimer que les pertes de charge en régime turbulent sont proportionnelles à la longueur de la conduite L, au carré du débit Q et inversement proportionnelles au diamètre à la puissance 5.

$$\Delta P = k \, \frac{L \, Q^2}{D^5}$$

Une réduction locale du diamètre intérieur de 3.5" au lieu de 4.5" sur une longueur de 3 ft soit 91,4 cm augmente les pertes de charge d'environ 10%. Cette augmentation atteint 26% pour un diamètre de 3" soit 7,62 cm et seulement 3% pour un diamètre de 4" soit 10,16 cm.

En outre, il existe un besoin d'adapter une colonne montante existante pour résister à des pressions plus élevées.

La présente invention concerne un élément de conduite comprenant un tube fretté pourvu à ses extrémités de deux réceptacles, dans lesquels sont fixés des embouts mâle et femelle réalisés en acier à haute limite élastique. L'utilisation du frettage permet de limiter le poids de la conduite, tout en améliorant la résistance à la pression de l'élément de conduite. La réalisation du raccordement avec des embouts à haute limite élastique permet également la résistance à la pression de l'élément de conduite, tout en limitant l'épaisseur, et donc le poids des moyens de raccordement.

L'invention concerne aussi un tronçon de colonne montante comprenant au moins un élément de conduite auxiliaire avec ces caractéristiques. En outre, l'invention concerne un procédé pour faire évoluer une colonne montante en remplaçant un élément de conduite auxiliaire par un élément de conduite avec ces caractéristiques.

**Le dispositif selon l'invention**

L'invention concerne un élément de conduite comportant au moins un tube fretté, ledit tube fretté comprenant une partie centrale constituée d'un noyau tubulaire en acier recouvert d'au moins une couche de frettage, deux réceptacles fixés aux extrémités dudit noyau tubulaire, un embout mâle et un embout femelle fixés dans lesdits réceptacles. Lesdits embouts mâle et femelle sont réalisés en acier à haute limite élastique.

Selon l'invention, lesdits réceptacles sont soudés aux extrémités dudit noyau tubulaire.

Conformément à la mise en œuvre, au moins un réceptacle est partiellement recouvert d'au moins une couche de frettage.

En outre, au moins une couche de frettage supplémentaire s'étend de part et d'autre de la soudure entre ledit noyau tubulaire et ledit réceptacle.

Selon un aspect, lesdits réceptacles sont réalisés en acier ayant une limite élastique similaire audit acier dudit noyau tubulaire, et inférieure à la limite élastique desdits embouts mâle et femelle.

Conformément à une caractéristique, lesdits embouts mâle et femelle sont fixés dans lesdits réceptacles par vissage, frettage ou collage.

Selon un aspect de l'invention, le diamètre interne desdits embouts mâle et femelle est sensiblement égal au diamètre interne dudit noyau tubulaire.

De préférence, lesdites couches de frettage sont constituées par des éléments de renfort en matériau composite, notamment à partir de fibres enrobées dans une matrice polymère.

De manière avantageuse, lesdits réceptacles comportent une portion sensiblement tronconique.

De plus, la présente invention concerne un tronçon de colonne montante comportant un élément de tube principal, et au moins un élément de conduite auxiliaire disposé sensiblement parallèlement audit élément de tube principal, les extrémités dudit tube principal comportant des moyens de connexion, et dans lequel ledit élément de conduite auxiliaire est un élément de conduite selon l'une des caractéristiques précédentes.

En outre, l'invention concerne un procédé pour faire évoluer une colonne montante comprenant au moins deux tronçons de colonne montante, chaque tronçon de colonne montante comportant un élément de tube principal et au moins un élément de conduite auxiliaire disposé sensiblement parallèlement audit élément de tube principal, ledit élément de conduite auxiliaire comprenant des moyens de raccordement à ses extrémités. Pour ce procédé, on réalise au moins les étapes suivantes pour au moins un tronçon de colonne montante :

a) on démonte au moins un élément de conduite auxiliaire ;
b) on fixe un réceptacle à chaque extrémité d'un noyau tubulaire en acier ;
c) on recouvre ledit noyau tubulaire d'au moins une couche de frettage ;
d) on positionne par rapport audit élément de tube principal ledit noyau tubulaire fretté pourvu desdits réceptacles sensiblement parallèlement audit élément de tube principal à la place dudit élément de conduite auxiliaire démonté ;

EP 3 447 353 B1

et

e) on fixe un embout mâle et un embout femelle dans lesdits réceptacles, lesdits embouts mâle et femelle étant en acier à haute limite élastique.

Selon un mode de réalisation, on fixe lesdits embouts mâle et femelle auxdits réceptacles par vissage, frettage ou collage.

Conformément à une mise en œuvre, on recouvre partiellement au moins un réceptacle d'au moins une couche de frettage.

Avantageusement, on réalise ledit noyau tubulaire à partir dudit élément de conduite auxiliaire démonté, auquel on a retiré lesdits moyens de raccordement.

Selon un aspect de l'invention, on recouvre lesdites couches de frettage par une couche de protection.

De préférence, ledit procédé comporte une étape initiale de désassemblage d'au moins un équipement de ladite colonne montante, tel qu'un flotteur, un collier de maintien ou une plaque guide.

Selon une mise en œuvre de l'invention, ledit procédé comporte une étape finale d'assemblage d'au moins un équipement dudit tronçon de colonne montante, tel qu'un flotteur, un collier de maintien ou une plaque guide.

De manière avantageuse, on positionne ledit noyau tubulaire au moyen de brides prévues sur ledit élément de tube principal.

**Présentation succincte des figures**

D'autres caractéristiques et avantages du dispositif selon l'invention, apparaîtront à la lecture de la description ci-après d'exemples non limitatifs de réalisations, en se référant aux figures annexées et décrites ci-après.

La figure 1, déjà décrite, illustre un élément de conduite selon l'art antérieur.
La figure 2 illustre un élément de conduite selon un mode de réalisation de l'invention.
La figure 3 illustre le raccordement de deux éléments de conduite selon un mode de réalisation de l'invention.
La figure 4 illustre une étape du procédé pour faire évoluer un tronçon de colonne montante selon un mode de réalisation de l'invention

**Description détaillée de l'invention**

Elément de conduite

La présente invention concerne un élément de conduite haute pression. L'élément de conduite comporte un tube fretté. Le tube fretté comprend un partie centrale constituée d'un noyau tubulaire en acier et deux réceptacles fixés aux deux extrémités du noyau tubulaire, le noyau tubulaire étant recouvert d'au moins une couche de frettage. De plus, l'élément de conduite haute pression comprend un embout mâle fixé dans un premier réceptacle, et un embout femelle fixé dans un deuxième réceptacle. L'embout mâle est destiné à coopérer avec un embout femelle d'un deuxième élément de conduite pour créer une connexion étanche entre les deux éléments de conduite.

Selon l'invention, les embouts mâle et femelle sont réalisés en acier à haute limite élastique. Un acier à haute limite élastique présente de très bonnes propriétés mécaniques telles que : la résistance à la traction et à la sollicitation. Ses caractéristiques permettent de significatives réductions d'épaisseur et par conséquent une réduction du poids lors de l'utilisation. Ainsi, l'élément de conduite peut résister aux hautes pressions tout en présentant un poids limité, et sans surépaisseur pouvant générer des pertes de charge. De préférence, l'acier utilisé pour les embouts présente une limite élastique supérieure ou égale à 110 ksi soit 758 MPa.

Selon un exemple de réalisation, les embouts mâle et femelle peuvent être réalisés en acier choisi parmi les grades suivants : 4130, 4140 (selon ASTM), C90, T95, C110, P110, Q125 (selon l'API), etc.

L'utilisation conjointe d'un tube fretté et d'embouts en acier à haute limite élastique permet un gain de masse significatif avec une résistance à la pression élevée.

La réalisation d'un élément de conduite pourvu de réceptacles et d'embouts mâle et femelle, permet de concevoir et de fabriquer le noyau tubulaire et les embouts mâle et femelle de manière indépendante, mais spécifiques à chacune des installations.

Avantageusement, afin de permettre une symétrie et une modularité de l'élément de conduite, les deux réceptacles peuvent être identiques.

Selon un aspect de l'invention, les réceptacles peuvent avoir une portion tronconique. Selon un exemple de réalisation non limitatif, les réceptacles peuvent être formés d'une première partie cylindrique, une deuxième partie tronconique et une troisième partie cylindrique, de manière à réaliser un réceptacle de section continue, c'est-à-dire sans les discontinuités que peuvent former par exemple des épaulements. La première partie cylindrique est la partie destinée à être fixée au noyau tubulaire et la troisième partie est destinée à recevoir les embouts mâle et femelle. De préférence, le diamètre externe, le diamètre interne et l'épaisseur de la première partie cylindrique sont sensiblement identiques au diamètre externe, au diamètre interne et à l'épaisseur du noyau tubulaire. Ainsi la fixation du réceptacle sur le noyau tubulaire est facilitée. De même, le diamètre interne de la troisième partie cylindrique correspond au diamètre externe des embouts mâle et femelle. Avantageusement, le réceptacle peut avoir une épaisseur sensiblement constante sur toute sa longueur.

La conicité de ladite partie tronconique peut être comprise entre 10° et 45°. En effet, la conicité de ladite partie tronconique peut être supérieure à 10° de manière à limiter la longueur de la partie tronconique, afin de réduire la masse de l'élément de transition et par conséquent la masse de l'élément de conduite. De plus, la conicité peut rester inférieure à 45° pour faciliter et améliorer l'enroulement de l'élément de renfort composite (frettage).

Pour diminuer le poids de l'élément de transition, il est intéressant de limiter la longueur de la troisième partie cylindrique. Cette longueur est utile pour permettre la fixation des embouts mâle et femelle.

Selon un mode de réalisation de l'invention, les réceptacles sont soudés aux extrémités du noyau tubulaire. De cette manière, la fixation est simple à mettre en œuvre, car elle ne nécessite pas de conception particulière du noyau tubulaire ni des réceptacles.

Afin de renforcer les réceptacles, il peut être prévu qu'au moins une couche de frettage recouvre au moins partiellement les réceptacles.

Cela est particulièrement avantageux, lorsque les réceptacles sont soudés au noyau tubulaire, car cela permet de renforcer la soudure. Selon un exemple de réalisation, au moins une couche de frettage supplémentaire (en plus de celles prévues pour le noyau tubulaire) peut être prévue pour s'étendre de part et d'autre de la soudure entre le noyau tubulaire et le réceptacle. Le nombre de couches de frettage supplémentaires peut être choisi de manière à ce que la résistance à la pression interne de la zone de soudure soit supérieure à la résistance à la pression interne de la zone centrale dudit noyau tubulaire. Ainsi, l'élément de conduite présente l'avantage d'être plus résistant à la pression interne au niveau de la zone de soudure qu'au niveau du noyau tubulaire.

Pour le mode de réalisation décrit ci-dessus, pour lequel le réceptacle comprend une partie tronconique entre deux parties cylindriques, la couche de frettage peut recouvrir la première partie cylindrique du réceptacle, qui est la partie du réceptacle ayant le diamètre minimal.

De manière avantageuse, les réceptacles sont réalisés en acier, dont la limite élastique est sensiblement égale à la limite élastique de l'acier du noyau tubulaire, et dont la limite élastique est inférieure à la limite élastique de l'acier des embouts mâle et femelle.

Selon un exemple, les réceptacles peuvent être réalisés en acier 4130 (norme ASTM), qui présente une limite élastique de 80 ksi soit 552 MPa.

Conformément à un exemple, le noyau tubulaire peut être réalisé en acier X80 (norme API 5L), qui présent une limite élastique de 80 ksi soit 552 MPa. Alternativement, le noyau tubulaire peut être réalisé en acier X65, X70, X75, X90, X100 (norme API 5L).

Selon un aspect de l'invention, les embouts mâle et femelle peuvent être fixés dans les réceptacles par vissage. Cette fixation simple est compatible avec les matériaux des réceptacles et des embouts mâle et femelle.

Alternativement, les embouts mâle et femelle peuvent être fixés dans les réceptacles par frettage, par collage, ou par tout moyen analogue.

Afin de limiter les pertes de charge, le diamètre interne des embouts mâle et femelle peut être sensiblement égal au diamètre interne du noyau tubulaire. Pour ces valeurs, on entend par sensiblement égal une différence d'environ 10 %.

Pour le mode de réalisation pour lequel les réceptacles comprennent une partie tronconique entre deux parties cylindriques, le diamètre interne de la première partie cylindrique du réceptacle peut être sensiblement égal au diamètre interne du noyau tubulaire et au diamètre interne des embouts mâle et femelle.

L'élément de renfort (réalisant les couches de frettage) peut être réalisé à partir d'une matrice de polyamide renforcée par des fibres, notamment des fibres de carbone. Alternativement, on peut utiliser d'autres matrices, comme les époxydes, les polypropylènes, les polyéthylènes, , les polyétheréthercétone, les polyfluorures de vinylidène ou d'autres fibres comme le verre ou les aramides. Le frettage comporte un nombre de couches suffisant pour que le tube résiste à une pression interne déterminée. Le nombre de couches de frettage est généralement constant sur toute la longueur du noyau tubulaire. Il est rappelé qu'un des principes du frettage consiste à induire une précontrainte de compression dans le noyau tubulaire (et éventuellement dans une portion du réceptacle recouverte de couches de renfort). Ainsi précontraint, la capacité de résistance à la pression interne du noyau tubulaire est augmentée, puisque la pression admissible dans cet élément de conduite est augmentée de la valeur de la pression interne qui équilibrerait la pression de frettage. Un autre avantage du frettage est la diminution de la masse de l'élément de conduite. En effet, réaliser un élément de conduite uniquement en métal avec une même résistance à la pression interne nécessite une épaisseur de tube plus importante, ce qui implique une masse du tube plus élevée.

Selon un mode de réalisation, le frettage est réalisé par enroulement sous tension d'une ou plusieurs couches de renfort sur le noyau tubulaire et optionnellement sur une partie des réceptacles. L'élément de renfort sous tension induit une contrainte de compression dans le noyau tubulaire et optionnellement dans la partie recouverte des réceptacles.

La surface extérieure du tube fretté de l'élément de conduite selon l'invention peut être recouverte d'une enveloppe de protection, permettant notamment de le protéger du milieu marin. Cette enveloppe de protection peut être réalisée par bobinage, c'est à dire par enroulage d'un élément allongé autour du tube fretté suivant des spires jointives et collées les unes aux autres. L'élément allongé peut être bobiné sans tension et peut être réalisé à partir d'une matrice en polyamide chargée de fibres de verre ou de Kevlar ™. L'enveloppe de protection peut également servir à donner la coloration externe du tube fretté, par exemple blanche.

En variante, la précontrainte appliquée dans le noyau par frettage peut être réalisée par d'autres moyens que la mise en traction de la bande de renfort, ainsi le frettage peut notamment être réalisé :

- par une mise en pression interne de l'élément de conduite entraînant une déformation plastique du noyau tubulaire, cette technique est appelée l'auto-frettage : l'élément de renfort est enroulé sans tension ou sous très faible tension sur le tube métallique ; la contrainte de frettage est introduite lors d'une épreuve hydraulique du tube ainsi constitué à une pression provoquant le dépassement de la limite élastique dans le tube métallique et la déformation plastique du tube. Après retour à la pression nulle, il subsiste des contraintes résiduelles de compression dans le tube métallique et des contraintes de traction dans les éléments de renfort en composite, ou
- par une déformation du noyau tubulaire par traction du noyau tubulaire et en appliquant une pression sur l'extérieur du noyau tubulaire (ce procédé de réalisation est décrit dans une demande de brevet FR 2 961 427 du demandeur).

Les réceptacles et les embouts mâle et femelle sont des pièces tubulaires pouvant être obtenues par exemple par usinage, forgeage ou moulage, indépendamment du noyau tubulaire.

De plus, le noyau tubulaire peut être fabriqué à partir d'une ébauche laminée en acier.

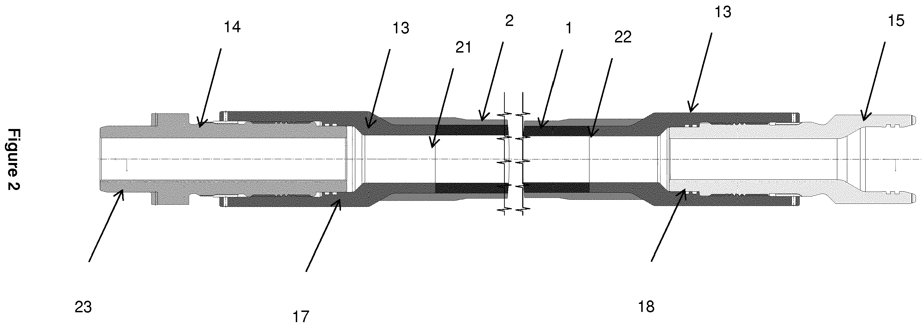

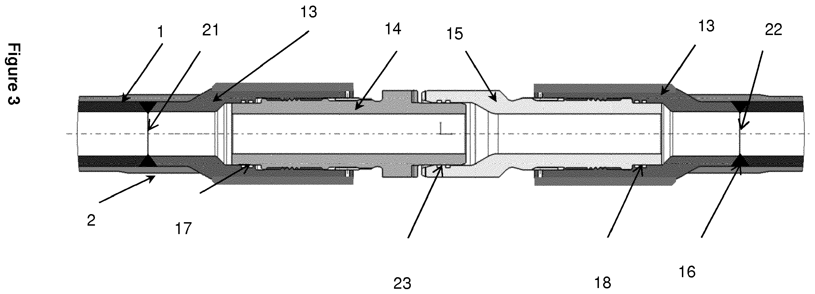

Les figures 2 et 3 illustrent, schématiquement et de manière non limitative, un mode de réalisation d'un élément de conduite haute pression selon l'invention. La figure 2 illustre un élément de conduite, et la figure 3 illustre la connexion de deux éléments de conduite.

Le tube fretté selon l'invention est constitué d'un noyau tubulaire 1 et de deux réceptacles 13 identiques fixés au moyen des soudures 16 sur les extrémités 21 et 22 dudit noyau tubulaire 1. Le noyau tubulaire 1 est constitué d'un tube métallique ayant un diamètre externe et une épaisseur sensiblement constants sur sa longueur et d'une couche de renfort 2. Des réceptacles 13 sont soudés 16 au noyau tubulaire 1. Les réceptacles 13 comportent une portion tronconique entre deux portions cylindriques. La première portion cylindrique, qui est soudée au noyau tubulaire 1, possède un diamètre interne, un diamètre externe et une épaisseur sensiblement identiques au diamètre interne, au diamètre externe et à l'épaisseur du noyau tubulaire. La partie tronconique permet d'élargir le réceptacle 13, de telle sorte que le diamètre interne du réceptacle 13 pour l'autre portion cylindrique corresponde au diamètre externe des embouts mâle 14 et femelle 15. De plus, les embouts mâle 14 et femelle 15 sont fixés dans (à l'intérieur) des réceptacles 13. Les embouts mâle 14 et femelle 15 sont utilisés pour la connexion de deux éléments de conduite. L'embout mâle 14 est fixé dans le réceptacle 13 par vissage au moyen d'un filetage 17. L'embout femelle 15 est fixé dans le réceptacle 13 par vissage au moyen d'un filetage 18. Le diamètre interne des embouts mâle 14 et femelle 15 est sensiblement identique au diamètre interne du noyau tubulaire 1 et de la première partie cylindrique du réceptacle 13. L'embout mâle 14 comporte une portion 23 à son extrémité qui pénètre dans l'embout femelle 15, de manière à former une connexion étanche entre deux éléments de conduite.

Pour assurer une bonne résistance à la pression interne, liée aux pressions de fluide circulant dans la conduite, le noyau tubulaire 1 est recouvert sur au moins toute sa longueur d'un nombre de couches de frettage 2, réalisées par un élément de renfort. Dans le mode de réalisation préférentiel illustré, le frettage 2 est appliqué également de part et d'autre de la zone de soudure 16, donc également en partie sur les réceptacles 13. Pour cette zone, des couches de frettage supplémentaires sont généralement appliquées.

Tronçon de colonne montante

L'invention concerne également un tronçon de colonne montante comportant un élément de tube principal, un élément de conduite auxiliaire disposé sensiblement parallèlement à l'élément de tube principal, les extrémités de l'élément de tube principal comportant des moyens de connexion pour connecter deux éléments de tube principal ensemble.

Selon l'invention, l'élément de conduite auxiliaire est un élément de conduite selon l'une quelconque des combinaisons de variantes décrites ci-dessus.

De préférence, les moyens de connexion des éléments de tube principal sont conçus et dimensionnés pour satisfaire les spécifications mentionnées par les normes API 16 R et API 2RD éditées par l'American Petroleum Institute (Institut Américain du Pétrole).

Selon un mode de réalisation, les moyens de connexion comprennent une bague de verrouillage. La bague de verrouillage peut être interne (à l'intérieur du tube principal), externe (à l'extérieur du tube principal et entre le tube principal et les conduites auxiliaires), ou périphérique (à l'extérieur du tube principal, et à l'extérieur des conduites auxiliaires).

De manière avantageuse, la bague de verrouillage peut être adaptée pour former un assemblage à baïonnette avec au moins un élément de tube principal. Alternativement, la bague de verrouillage peut être adaptée pour former un assemblage vissé avec au moins un élément de tube principal.

Un exemple de bague externe avec un assemblage à baïonnette est décrite dans les demandes de brevet FR 2 799 789, FR 3 020 654 et FR 3 045 708.

Alternativement, les moyens de connexion peuvent comprendre des brides boulonnées, ou tout autre moyen de connexion analogue.

Selon un exemple non limitatif, la conduite auxiliaire formée par des éléments de conduite selon l'invention est une « kill line » ou une « choke line ». La ligne "choke" est une ligne de sécurité véhiculant des fluides (huile, eau, gaz) en provenance du puits lors d'une venue et les dirigeant vers le manifold de duses et la torche. La ligne "kill" est une ligne de sécurité qui permet d'injecter dans le puits des fluides lourds et des ciments permettant de stopper une éruption incontrôlable autrement.

*Procédé pour faire évoluer une colonne montante*

En outre, la présente invention a pour objectif de rendre une colonne montante existante résistante à des pressions plus élevés (par exemple pour rendre une colonne montante initialement résistante à 15 000 psi soit 103 MPa à une pression de 20 000 psi soit 138 MPa). Pour cela, la présente invention concerne un procédé pour faire évoluer une colonne montante comprenant au moins deux tronçons de colonne montante. Chaque tronçon de colonne montante comporte un élément de tube principal et au moins un élément de conduite auxiliaire non-conforme à l'invention. Le procédé selon l'invention prévoit le remplacement d'un élément de conduite auxiliaire non-conforme à l'invention par un élément de conduite auxiliaire conforme à l'invention (et par conséquent plus résistante aux hautes pressions) au moyen des étapes suivantes :

- on démonte au moins un élément de conduite auxiliaire du tronçon de colonne montante,
- on fixe un réceptacles à chaque extrémité d'un noyau tubulaire en acier, de préférence par soudage,
- on recouvre le noyau tubulaire d'au moins une couche de frettage,
- on positionne, par rapport à l'élément de tube principal, le noyau tubulaire fretté pourvu des réceptacles sensiblement parallèlement à l'élément de tube principal à la place de l'élément de conduite auxiliaire démonté, et
- on fixe un embout mâle et un embout femelle dans les réceptacles, les embouts mâle et femelle étant en acier à haute limite élastique.

Le procédé présente l'avantage de ne pas modifier le tube principal de la colonne montante, ce qui rend le procédé d'évolution de la colonne montante simple et peu onéreux. De plus, le procédé selon l'invention permet de ne pas modifier les brides d'extrémité du tube principal, et les flotteurs équipant la colonne montante.

Après les étapes du procédé selon l'invention, on obtient un élément de conduite auxiliaire adapté à une colonne montante de forage selon l'une des combinaisons des variantes décrites précédemment, par exemple un élément de conduite tel que décrit en relation avec les figures 2 et 3. Cette élément de conduite auxiliaire est résistante aux hautes pressions, tout en ayant un poids limité.

La colonne montante peut être conçue et dimensionnée pour satisfaire les spécifications mentionnées par les normes API 16 R et API 2RD éditées par l'American Petroleum Institute (Institut Américain du Pétrole).

Avantageusement, les étapes du procédé selon l'invention sont réalisées à la surface, et non en mer.

Selon un mode de réalisation de l'invention, les embouts mâle et femelle peuvent être fixés aux réceptacles par vissage. Cette fixation est compatible avec les matériaux des réceptacles et des embouts mâle et femelle.

Alternativement, les embouts mâle et femelle peuvent être fixés dans les réceptacles par frettage ou par collage.

Afin d'assurer une modularité de l'élément de conduite auxiliaire, les deux réceptacles peuvent être identiques.

Conformément à une mise en œuvre de l'invention, les réceptacles sont réalisés en acier, dont la limite élastique est similaire à la limite élastique du noyau tubulaire, et dont la limite élastique est inférieure à la limite élastique de l'acier des embouts mâle et femelle.

Afin de renforcer la fixation entre le réceptacle et le noyau tubulaire, on peut également recouvrir au moins partiellement au moins un réceptacle par au moins une couche de frettage. Ceci est particulièrement avantageux pour le mode de réalisation, pour lequel le réceptacle est soudé sur le noyau tubulaire.

De plus, afin d'optimiser le renforcement au niveau de la fixation, des couches de frettage supplémentaires peuvent être prévues, de sorte qu'elles s'étendent de part et d'autre de la fixation entre le noyau tubulaire et les réceptacles.

L'élément de renfort (réalisant les couches de frettage) peut être réalisé à partir d'une matrice de polyamide renforcée par des fibres, notamment des fibres de carbone. Alternativement, on peut utiliser d'autres matrices, comme les époxydes, les polypropylènes, les polyéthylènes, les polyétheréthercétone, les polyfluorures de vinylidène ou d'autres fibres comme le verre ou les aramides. Le frettage comporte un nombre de couches suffisant pour que le tube résiste à une pression interne déterminée. Le nombre de couche de frettage est généralement constant sur toute la longueur du noyau tubulaire. Il est rappelé qu'un des principes du frettage consiste à induire une précontrainte de compression dans le noyau métallique (et éventuellement dans une portion du réceptacle recouverte de couches de renfort). Ainsi précontraint, la capacité de résistance à la pression interne du noyau tubulaire est augmentée, puisque la pression admissible dans cet élément de conduite est augmentée de la valeur de la pression interne qui équilibrerait la pression de frettage. Un autre avantage du frettage est la diminution de la masse de l'élément de conduite. En effet, réaliser un élément de conduite uniquement en métal avec une même résistance à la pression interne nécessite une épaisseur de tube plus importante, ce qui implique une masse du tube plus élevée.

Selon un mode de réalisation, le frettage est réalisé par enroulement sous tension d'une ou plusieurs couches de renfort sur le noyau tubulaire et optionnellement sur une partie des réceptacles. L'élément de renfort sous tension induit une contrainte de compression dans le noyau tubulaire et optionnellement dans la partie recouverte des réceptacles.

La surface extérieure du tube fretté de l'élément de conduite selon l'invention peut être recouverte d'une enveloppe de protection, permettant notamment de le protéger du milieu marin. Cette enveloppe de protection peut être réalisée par bobinage, c'est à dire par enroulage d'un élément allongé autour du tube fretté suivant des spires jointives et collées les unes aux autres. L'élément allongé peut être bobiné sans tension et peut être réalisé à partir d'une matrice en polyamide chargée de fibres de verre ou de Kevlar ™. L'enveloppe de protection peut également servir à donner la coloration externe du tube fretté, par exemple blanche.

En variante, la précontrainte appliquée dans le noyau par frettage peut être réalisée par d'autres moyens que la mise en traction de la bande de renfort, ainsi le frettage peut notamment être réalisé :

- par une mise en pression interne de l'élément de conduite entraînant une déformation plastique du noyau tubulaire, cette technique est appelée l'auto-frettage : l'élément de renfort est enroulé sans tension ou sous très faible tension sur le tube métallique ; la contrainte de frettage est introduite lors d'une épreuve hydraulique du tube ainsi constitué à une pression provoquant le dépassement de la limite élastique dans le tube métallique et la déformation plastique du tube. Après retour à la pression nulle, il subsiste des contraintes résiduelles de compression dans le tube métallique et des contraintes de traction dans les éléments de renfort en composite, ou
- par une déformation du noyau tubulaire par traction du noyau tubulaire et en appliquant une pression sur l'extérieur du noyau tubulaire (ce procédé de réalisation est décrit dans une demande de brevet FR 2 961 427 du demandeur).

Les étapes de positionnement et de fixation des embouts peuvent être mises en œuvre au moyen de brides prévues sur l'élément de tube principal. Avantageusement, les brides peuvent être prévues aux extrémités de l'élément de tube principal. Les brides peuvent comporter des orifices pour le passage de l'élément de conduite auxiliaire de remplacement.

Selon un premier mode de réalisation, le noyau tubulaire utilisé peut être un noyau tubulaire réalisé spécifiquement pour le procédé.

Alternativement, le noyau tubulaire peut être obtenu à partir de l'élément de conduite auxiliaire démonté. Pour cela une fois démonté, on retire les moyens de raccordement aux extrémités du noyau, puis, le noyau tubulaire initial peut être nettoyé, et sablé pour une meilleure adhésion des couches de frettage.

Une colonne montante est généralement pourvue d'équipements tels que des flotteurs, d'autres conduites auxiliaires, des colliers de maintien, des plaques guides. Ces équipements sont généralement indépendants des lignes auxiliaires.

Dans ce cas, le procédé selon l'invention peut comprendre une étape initiale (c'est-à-dire avant l'étape de découpe) de désassemblage de ces équipements. Ainsi, il est plus aisé de manœuvrer les tronçons de la colonne montante, et de réaliser les étapes de démontage de l'élément de conduite auxiliaire d'origine et d'assemblage de l'élément de conduite auxiliaire selon l'invention. De préférence, on réalise le désassemblage dans cet ordre : les flotteurs, les colliers de maintien, d'autres conduites auxiliaires et éventuellement le cas échéant des plaques guides.

En outre, le procédé selon l'invention peut comprendre une étape finale d'assemblage de ces équipements. De préférence, on réalise l'assemblage dans cet ordre : les éventuelles plaques guides, les autres conduites auxiliaires, les colliers de maintien, et les flotteurs.

De préférence, les équipements de la colonne montante ne sont pas modifiés par le procédé selon l'invention. Ainsi, la modification du la colonne montante concerne uniquement une partie des colonnes auxiliaires.

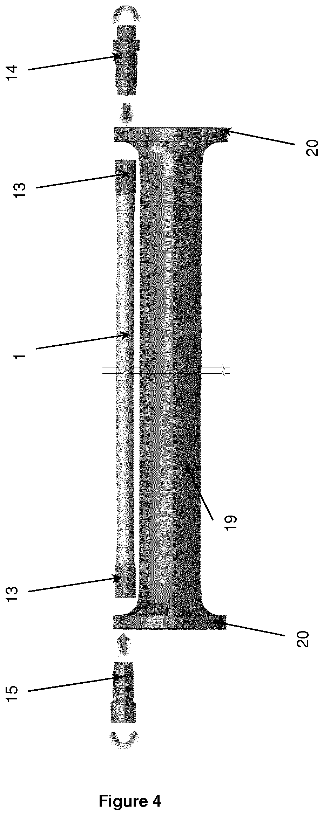

La figure 4 illustre, schématiquement et de manière non limitative, une étape du procédé pour faire évoluer une colonne montante selon l'invention. Cette figure illustre l'étape de fixation des embouts mâle 14 et femelle 15 dans les réceptacles 13. Pour cela, l'élément de conduite auxiliaire comportant le noyau tubulaire 1 fretté et les réceptacles 13 est positionné sensiblement parallèlement à l'élément de tube principal 19. L'élément de tube principal 19 comporte à ces extrémités des brides 20 pour le passage des lignes auxiliaires. Pour la fixation des embouts mâle 14 et femelle 15, ceux-ci sont dans un premier temps translatés longitudinalement pour être insérés dans les réceptacles 13 en passant dans les orifices des brides 20. Dans un deuxième temps, les embouts mâle 14 et femelle 15 sont mis en rotation dans les réceptacles 13 pour les fixer par vissage.

Exemple comparatif

Les caractéristiques et avantages de l'invention apparaîtront plus clairement à la lecture de l'exemple comparatif ci-après.

Le tableau ci-dessous compare l'architecture de colonne montante actuelle (selon l'art antérieur) avec ses lignes Choke and Kill (C & K) en acier (sans frettage) spécifiées pour 15,000 psi (103 MPa), avec cette même colonne montante dans lequel les lignes Choke et Kill sont remplacées par des lignes hybrides (en acier avec frettage) spécifiées pour 20,000 psi (138 MPa) selon l'invention. On peut noter entre autres que le poids linéique du tube hybride selon l'invention est inférieur à celui du tube acier selon l'art antérieur, bien qu'ayant une résistance plus élevée. Cet allègement se traduit par un gain de 598,000 Lbs (271 tonnes) sur le poids total du riser. Le diamètre extérieur du tube hybride selon l'invention dépasse légèrement celui du tube acier selon l'art antérieur (6.5" soit 16,51 cm vs 6.7" soit 17 cm) mais il reste inférieur au diamètre des cavités des flotteurs. Autrement dit, ces lignes peuvent être logées dans les flotteurs d'origine sans aucune modification.

Tableau 1 - Comparaison de colonnes montantes

| | Colonne montante selon l'art antérieur | Colonne montant selon l'invention |
|---|---|---|
| **Constitution de la colonne montante** | | |
| Tronçons au sommet | 4 | 4 |
| Tronçons avec flotteurs | 80 | 80 |
| Tronçon au fond | 5 | 5 |
| **Tube principal** | | |
| Epaisseur WT | 2,38 cm | 2,38 cm |
| Diamètre externe OD | 53,34 cm | 53,34 cm |
| **Flotteurs** | | |
| Diamètre | 147 cm | 147 cm |
| **Lignes C & K** | | |
| Résistance à la pression | 103 MPa | 138 MPa |
| Epaisseur acier | 2,54 cm | 1,75 cm |
| Epaisseur composite | | 1,04 cm |
| Précontrainte acier | | 248 MPa |
| Diamètre externe tube | 16,51 cm | 17 cm |
| Poids linéaire | 86,3 kg/m | 62,5 kg/m |
| **Masse de la colonne dans l'air** | 2939 t | 2668 t |
| Acier | 1866 t | 1560 t |
| Composite | | 34 t |
| Flotteurs | 1073 t | 1073 t |
| **Masse de la colonne dans l'eau** | 315 t | 59 t |

**Revendications**

**1.** Elément de conduite comportant au moins un tube fretté, ledit tube fretté comprenant une partie centrale constituée d'un noyau tubulaire (1) en acier recouvert d'au moins une couche de frettage (2), deux réceptacles (13) fixés aux extrémités (21, 22) dudit noyau tubulaire (1), un embout mâle (14) et un embout femelle (15) fixés dans lesdits réceptacles (13), **caractérisé en ce que**

- lesdits réceptacles (13) sont soudés aux extrémités (21, 22) dudit noyau tubulaire (1),
- au moins un réceptacle (13) est partiellement recouvert d'au moins une couche de frettage (2),
- au moins une couche de frettage supplémentaire s'étend de part et d'autre d'une soudure (16) entre ledit noyau tubulaire (1) et ledit réceptacle (13),
- lesdits embouts mâle (14) et femelle (15) sont réalisés en acier à haute limite élastique.

2.  Elément de conduite selon la revendication 1, dans lequel lesdits réceptacles (13) sont réalisés en acier ayant une limite élastique similaire audit acier dudit noyau tubulaire (1), et inférieure à la limite élastique desdits embouts mâle (14) et femelle (15).

3.  Elément de conduite selon l'une des revendications précédentes, dans lequel lesdits embouts mâle (14) et femelle (15) sont fixés dans lesdits réceptacles (13) par vissage (17, 18), frettage ou collage.

4.  Elément de conduite selon l'une des revendications précédentes, dans lequel le diamètre interne desdits embouts mâle (14) et femelle (15) est sensiblement égal au diamètre interne dudit noyau tubulaire (1).

5.  Elément de conduite selon l'une des revendications précédentes, dans lequel lesdites couches de frettage (2) sont constituées par des éléments de renfort en matériau composite, notamment à partir de fibres enrobées dans une matrice polymère.

6.  Elément de conduite selon l'une des revendications précédentes, dans lequel lesdits réceptacles (13) comportent une portion sensiblement tronconique.

7.  Tronçon de colonne montante comportant un élément de tube principal (19), et au moins un élément de conduite auxiliaire disposé sensiblement parallèlement audit élément de tube principal (19), les extrémités dudit tube principal comportant des moyens de connexion, et dans lequel ledit élément de conduite auxiliaire est un élément de conduite selon l'une des revendications précédentes.

8.  Procédé pour faire évoluer une colonne montante comprenant au moins deux tronçons de colonne montante, chaque tronçon de colonne montante comportant un élément de tube principal (19) et au moins un élément de conduite auxiliaire disposé sensiblement parallèlement audit élément de tube principal (19), ledit élément de conduite auxiliaire comprenant des moyens de raccordement à ses extrémités, **caractérisé en ce qu'**on réalise au moins les étapes suivantes pour au moins un tronçon de colonne montante :

    a) on démonte au moins un élément de conduite auxiliaire ;
    b) on fixe un réceptacle (13) à chaque extrémité d'un noyau tubulaire (1) en acier ;
    c) on recouvre ledit noyau tubulaire (1) d'au moins une couche de frettage (2) ;
    d) on positionne par rapport audit élément de tube principal (19) ledit noyau tubulaire (1) fretté pourvu desdits réceptacles (13) sensiblement parallèlement audit élément de tube principal (19) à la place dudit élément de conduite auxiliaire démonté ; et
    e) on fixe un embout mâle (14) et un embout femelle (15) dans lesdits réceptacles (13), lesdits embouts mâle (14) et femelle (15) étant en acier à haute limite élastique.

9.  Procédé selon la revendication 8, dans lequel on fixe lesdits embouts mâle (14) et femelle (15) auxdits réceptacles (13) par vissage (18, 19), frettage ou collage.

10. Procédé selon l'une des revendications 8 ou 9, dans lequel on recouvre partiellement au moins un réceptacle (13) d'au moins une couche de frettage (2).

11. Procédé selon l'une des revendications 8 à 10, dans lequel on réalise ledit noyau tubulaire (1) à partir dudit élément de conduite auxiliaire démonté, auquel on a retiré lesdits moyens de raccordement.

12. Procédé selon l'une des revendications 8 à 11, dans lequel on recouvre lesdites couches de frettage (2) par une couche de protection.

13. Procédé selon l'une des revendications 8 à 12, dans lequel ledit procédé comporte une étape initiale de désassemblage d'au moins un équipement de ladite colonne montante, tel qu'un flotteur, un collier de maintien ou une plaque guide.

**14.** Procédé selon l'une des revendications 8 à 13, dans lequel ledit procédé comporte une étape finale d'assemblage d'au moins un équipement dudit tronçon de colonne montante, tel qu'un flotteur, un collier de maintien ou une plaque guide.

**15.** Procédé selon l'une des revendications 8 à 14, dans lequel on positionne ledit noyau tubulaire au moyen de brides prévues sur ledit élément de tube principal.

**Patentansprüche**

**1.** Leitungselement aufweisend mindestens ein umhülltes Rohr, das umhüllte Rohr umfassend einen mittleren Abschnitt, der von einem röhrenförmigen Kern (1) aus Stahl gebildet ist, der von mindestens einer Umhüllungsschicht (2) bedeckt ist, zwei Aufnahmen (13), die an den Enden (21, 22) des röhrenförmigen Kerns (1) befestigt sind, ein männliches Endstück (14) und ein weibliches Endstück (15), die in den Aufnahmen (13) befestigt sind, **dadurch gekennzeichnet, dass**

- die Aufnahmen (13) an die Enden (21, 22) des röhrenförmigen Kerns (1) geschweißt sind,
mindestens eine Aufnahme (13) teilweise von mindestens einer Umhüllungsschicht (2) bedeckt ist,
- sich mindestens eine zusätzliche Umhüllungsschicht beiderseits einer Schweißung (16) zwischen dem röhrenförmigen Kern (1) und der Aufnahme (13) erstreckt,
- das männliche (14) und weibliche Endstück (15) aus Stahl mit hoher Streckgrenze gebildet sind.

**2.** Leitungselement nach Anspruch 1, wobei die Aufnahmen (13) aus Stahl mit einer Streckgrenze gebildet sind, die dem Stahl des röhrenförmigen Kerns (1) ähnelt und niedriger als die Streckgrenze des männlichen (14) und weiblichen Endstücks (15) ist.

**3.** Leitungselement nach einem der vorhergehenden Ansprüche, wobei das männliche (14) und weibliche Endstück (15) durch Verschrauben (17, 18), Aufschrumpfen oder Verkleben in den Aufnahmen (13) befestigt sind.

**4.** Leitungselement nach einem der vorhergehenden Ansprüche, wobei der Innendurchmesser des männlichen (14) und weiblichen Endstücks (15) im Wesentlichen gleich dem Innendurchmesser des röhrenförmigen Kerns (1) ist.

**5.** Leitungselement nach einem der vorhergehenden Ansprüche, wobei die Umhüllungsschichten (2) von Verstärkungselementen aus Verbundmaterial, insbesondere aus Fasern, die in eine Polymermatrix eingebettet sind, gebildet sind.

**6.** Leitungselement nach einem der vorhergehenden Ansprüche, wobei die Aufnahmen (13) einen im Wesentlichen kegelstumpfförmigen Abschnitt aufweisen.

**7.** Steigleitungsabschnitt aufweisend ein Hauptrohrelement (19) und mindestens ein Hilfsleitungselement, das im Wesentlichen parallel zum Hauptrohrelement (19) angeordnet ist, wobei die Enden des Hauptrohrs Verbindungsmittel aufweisen, und wobei das Hilfsleitungselement ein Leitungselement nach einem der vorhergehenden Ansprüche ist.

**8.** Verfahren zum Ausbau einer Steigleitung umfassend mindestens zwei Steigleitungsabschnitte, wobei jeder Steigleitungsabschnitt ein Hauptrohrelement (19) und mindestens ein Hilfsleitungselement, das im Wesentlichen parallel zum Hauptrohrelement (19) angeordnet ist, aufweist, das Hilfsleitungselement umfassend Anschlussmittel an seinen Enden, **dadurch gekennzeichnet, dass** für mindestens einen Steigleitungsabschnitt zumindest die folgenden Schritte durchgeführt werden:

a) es wird mindestens ein Hilfsleitungselement abmontiert;
b) es wird eine Aufnahme (13) an jedem Ende eines röhrenförmigen Kerns (1) aus Stahl befestigt;
c) der röhrenförmige Kern (1) wird mit mindestens einer Umhüllungsschicht (2) bedeckt;
d) der umhüllte röhrenförmige Kern (1), der mit den Aufnahmen (13) versehen ist, wird bezogen auf das Hauptrohrelement (19) im Wesentlichen parallel zum Hauptrohrelement (19) anstelle des abmontierten Hilfsleitungselements positioniert; und
e) ein männliches (14) und ein weibliches Endstück (15) werden in den Aufnahmen (13) befestigt, wobei das männliche (14) und weibliche Endstück (15) aus Stahl mit hoher Streckgrenze sind.

9. Verfahren nach Anspruch 8, wobei das männliche (14) und das weibliche Endstück (15) durch Verschrauben (18, 19), Aufschrumpfen oder Verkleben an den Aufnahmen (13) befestigt werden.

10. Verfahren nach einem der Ansprüche 8 oder 9, wobei mindestens eine Aufnahme (13) teilweise von mindestens einer Umhüllungsschicht (2) bedeckt wird.

11. Verfahren nach einem der Ansprüche 8 bis 10, wobei der röhrenförmige Kern (1) anhand des abmontierten Hilfsleitungselements gebildet wird, bei dem die Anschlussmittel abgenommen wurden.

12. Verfahren nach einem der Ansprüche 8 bis 11, wobei die Umhüllungsschichten (2) mit einer Schutzschicht bedeckt werden.

13. Verfahren nach einem der Ansprüche 8 bis 12, wobei das Verfahren einen Anfangsschritt des Demontierens mindestens einer Ausstattung der Steigleitung, wie beispielsweise eines Schwimmers, einer Halteschelle oder einer Führungsplatte aufweist.

14. Verfahren nach einem der Ansprüche 8 bis 13, wobei das Verfahren einen Endschritt des Montierens mindestens einer Ausstattung des Steigleitungsabschnitts, wie beispielsweise eines Schwimmers, einer Halteschelle oder einer Führungsplatte aufweist.

15. Verfahren nach einem der Ansprüche 8 bis 14, wobei der röhrenförmige Kern mittels Flanschen positioniert wird, die auf dem Hauptrohrelement vorgesehen sind.

## Claims

1. A line element comprising at least one hooped tube, said hooped tube comprising a central part constituted by a tubular core (1) made of steel covered by least one banding layer (2), two receptacles (13) fixed at the ends (21, 22) of said tubular core (1), a male tip (14) and a female tip (15) fixed in said receptacles (13), **characterized in that**

    - said receptacles (13) are welded to the ends (21, 22) of said tubular core (1),
    - at least one receptacle (13) is partially covered by at least one banding layer (2),
    - at least one supplementary banding layer extends on either side of a weld (16) between said tubular core (1) and said receptacle (13),
    - said male (14) and female (15) tips are made of steel with high elastic limit.

2. Line element according to Claim 1, wherein said receptacles (13) are made from steel having a similar elastic limit to said steel of said tubular core (1), and below the elastic limit of said male (14) and female (15) tips.

3. Line element according to one of the preceding claims, wherein said male (14) and female (15) tips are fixed in said receptacles (13) by screwing (17, 18), banding or adhesive bonding.

4. Line element according to one of the preceding claims, wherein the inside diameter of said male (14) and female (15) tips is substantially equal to the inside diameter of said tubular core (1).

5. Line element according to one of the preceding claims, wherein said banding layers (2) are constituted by reinforcement elements made of composite material, in particular based on fibres coated in a polymer matrix.

6. Line element according to one of the preceding claims, wherein said receptacles (13) comprise a substantially frustoconical portion.

7. Riser portion comprising a main tube element (19) and at least one auxiliary line element arranged substantially parallel to said main tube element (19), the ends of said main tube comprising connection means, and wherein said auxiliary line element is a line element according to one of the preceding claims.

8. Method for advancing a riser comprising at least two riser portions, each riser portion comprising a main tube element (19) and at least one auxiliary line element arranged substantially parallel to said main tube element (19), said auxiliary line element comprising coupling means at its ends, **characterized in that** at least the following steps are performed for at least one riser portion:

a) at least one auxiliary line element is detached;
b) the receptacle (13) at each end of a tubular core (1) made of steel is fixed;
c) said tubular core (1) is covered by at least one banding layer (2);
d) said banded tubular core (1) provided with said receptacles (13) substantially parallel to said main tube element (19) is positioned relative to said main tube element (19) in place of said detached auxiliary line element; and
e) a male tip (14) and a female tip (15) are fixed in said receptacles (13), said male (14) and female (15) tips being made of steel with high elastic limit.

9. Method according to Claim 8, wherein said male (14) and female (15) tips are fixed to said receptacles (13) by screwing (18, 19), banding or adhesive bonding.

10. Method according to one of Claims 8 and 9, wherein at least one receptacle (13) is covered partially with at least one banding layer (2).

11. Method according to one of Claims 8 to 10, wherein said tubular core (1) is produced from said detached auxiliary line element, from which said coupling mean have been removed.

12. Method according to one of Claims 8 to 11, wherein said banding layers (2) are covered by a protection layer.

13. Method according to one of Claims 8 to 12, wherein said method comprises an initial step of disassembling at least one item of equipment of said riser, such as a float, a retaining collar or a guide plate.

14. Method according to one of Claims 8 to 13, wherein said method comprises a final step of assembling at least one item of equipment of said riser portion, such as a float, a retaining collar or a guide plate.

15. Method according to one of Claims 8 to 14, wherein said tubular core is positioned by means of flanges provided on said main tube element.

FIG.1

**Art antérieur**
**Figure 1**

Figure 2

Figure 3

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2828262
- FR 2828121
- FR 2799789 A1
- EP 2985407 A1
- FR 2937676 A1
- FR 2956694 A1
- FR 2961427
- FR 2799789
- FR 3020654
- FR 3045708